(19) Europäisches Patentamt
European Patent Office
Office européen des brevets

(11) EP 1 063 260 A1

(12) **EUROPEAN PATENT APPLICATION**
published in accordance with Art. 158(3) EPC

(43) Date of publication:
**27.12.2000 Bulletin 2000/52**

(21) Application number: **98905777.3**

(22) Date of filing: **05.03.1998**

(51) Int. Cl.[7]: **C08L 23/04**, C08L 63/00, C08F 4/642, B32B 27/32

(86) International application number:
**PCT/JP98/00914**

(87) International publication number:
**WO 99/45063 (10.09.1999 Gazette 1999/36)**

(84) Designated Contracting States:
**DE FR GB IT**

(71) Applicant:
**NIPPON PETROCHEMICALS COMPANY, LTD.**
**Tokyo 100 (JP)**

(72) Inventors:
- **KASAHARA, Hiroshi,**
**Japan Polyolefins Co., Ltd.**
**Kawasaki-shi, Kanagawa 210-0863 (JP)**
- **WAKAYAMA, Masahiro,**
**Japan Polyolefins Co., Ltd.**
**Kawasaki-shi, Kanagawa 210-0863 (JP)**

(74) Representative:
**Henkel, Feiler, Hänzel**
**Möhlstrasse 37**
**81675 München (DE)**

# (54) POLYOLEFIN RESIN COMPOSITION, LAMINATE THEREOF, AND PROCESS FOR PRODUCING THE SAME

(57) A polyolefin resin composition which contains: a linear ethylene (co)polymer having a density d of from 0.86 to 0.97 g/cm$^3$, a melt flow rate (MFR) of from 0.01 to 100 g/10 minutes and a molecular weight distribution (Mw/Mn) of from 1.5 to 5.0; and an epoxy compound containing two or more epoxy groups in its molecule and having a molecular weight of 3,000 or less. Since it has a broad molding temperature range, high speed molding of a laminate having high adhesive strength can be effected.

FIG. 1

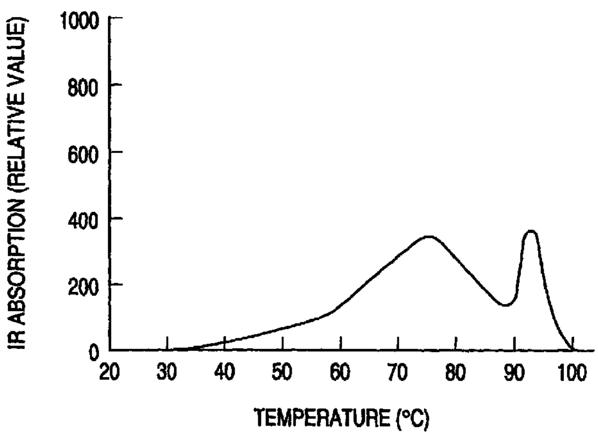




Printed by Xerox (UK) Business Services
2.16.7 (HRS)/3.6

## Description

### TECHNICAL FIELD

This invention relates to a polyolefin resin composition having excellent adhesive property with base materials. More specifically, the invention relates to a method for the production of laminates by extrusion laminating, which can provide a laminate having excellent physical properties and workability, particularly having high adhesive strength without using anchor coat agent, and which has a broad molding temperature range of from a low temperature region to a high temperature region and can effect high speed molding.

### BACKGROUND ART

Since polyolefin has excellent heat sealing property and moisture proof and can be easily processed, it is broadly used not only as monolayer films, sheets or molded container materials but also as laminates with various resin films or sheets, as well as with aluminum foil and the like metal foils or paper. A high-pressure radical process low density polyethylene (hereinafter referred to as "HpLDPE") is generally used in these laminates but, in recent years, a linear low density polyethylene (hereinafter referred to as "LLDPE") obtained by polymerization using a Ziegler type catalyst is used in films, sheets, hollow moldings, injection moldings and the like various uses because of its large strength and toughness in comparison with the HpLDPE.

However, further higher strength and high speed moldability at the time of the production of laminates are required even in these materials, for the thinning and lightening of moldings.

Thus, a high strength ethylene-α-olefin copolymer having markedly narrow molecular weight distribution and composition distribution (hereinafter referred to as "mLLDPE") has recently been developed making use of a metallocene catalyst. Since this mLLDPE shows excellent performances in terms, for example, of mechanical characteristics and optical characteristics, it is drawing attention as a packaging material and container material.

Under such circumstances, when the conventional HpLDPE is laminated on various base materials by extrusion laminating process, it must be laminated generally at a high molding temperature of 310°C or more using a base material coated with an anchor coat agent, for the purpose of obtaining necessary adhesive strength. In consequence, it has problems such as pollution of the working environment due to the use of a large amount of solvent for the anchor coat agent and the high temperature molding at the time of lamination, residual solvent odor in the final products and possible danger of fire.

On the other hand, LLDPE produced using a Ziegler type catalyst and mLLDPE produced using a metallocene catalyst have problems in that their stable molding cannot easily be made due to their thermal decomposition at a high temperature, they emit smoke at the time of molding, odors remain in the moldings and so on. Therefore, it is necessary to carry out lamination of LLDPE or mLLDPE at a temperature of 300°C or lower. In consequence, when LLDPE or mLLDPE is used as a packaging material by laminating it on a polyester film, polyamide film, metal foil or the like base material by extrusion laminating or the like process, there is a problem in that adhesive strength of the base material with LLDPE or mLLDPE is weak.

In order to improve the aforementioned adhesive strength with the base material, an ozone treating method in which ozone is sprayed on a melting film before its lamination to effect oxidation of the melting film surface by force (JP-A-57-157724; the term "JP-A" as used herein means an "unexamined published Japanese patent application) and a method in which an ozone treatment and an anchor coat agent are jointly used have been proposed. However, these methods also have disadvantages in that not only the production cost is increased but also improvement of the adhesive strength is not so good as desired, considering the bad influence by the use of ozone and solvent.

Taking the aforementioned circumstances into consideration, an object of the present invention is to provide a polyolefin resin composition which has: superior mechanical strength and optical characteristics to those of LLDPE prepared using a Ziegler type catalyst; and superior molding workability to that of mLLDPE, while having low temperature heat sealing ability and transparency equivalent to those of mLLDPE, and which does not require complex steps, has a broad molding temperature range from a low temperature region to a high temperature region and which is excellent in terms of adhesive strength with various base materials, water resistance and so on. Another object of the present invention is to provide a laminate obtained using the composition and a method for the production thereof.

### DISCLOSURE OF THE INVENTION

In accordance with the above objects, the present inventors conducted extensive studies and achieved the objects by blending a linear ethylene polymer or copolymer (hereinafter referred generally to as "linear ethylene (co)polymer") with an epoxy compound having two or more epoxy groups in its molecule. In the case of the novel linear (co)polymer to be used in the invention, it has a characteristic in that the content of low molecular weight components and

amorphous components is small.

Accordingly, the invention is directed to a polyolefin resin composition which comprises: resin component (I) containing a linear ethylene (co)polymer that satisfies requirements of having (a) a density of from 0.86 to 0.97 g/cm$^3$, (b) a melt flow rate of from 0.01 to 100 g/10 minutes and (c) a molecular weight distribution (Mw/Mn) of from 1.5 to 5.0; and component (II) comprising an epoxy compound containing two or more epoxy groups in its molecule and having a molecular weight of 3,000 or less, which is contained in an amount of from 0.01 to 5% by weight based on the total amount of components (I) and (II). In a preferred embodiment, the resin component (I) comprises 5% by weight or more of the linear ethylene (co)polymer and less than 95% by weight of other polyolefin resin. In a further preferred embodiment, the composition further contains component (III) comprising a compound or olefin polymer having a functional group capable of reacting with epoxy group, in an amount of less than 50% by weight based on the total amount of components (I), (II) and (III).

BRIEF DESCRIPTION OF THE DRWAINGS

Figs. 1 and 2 are graphs respectively showing elution temperature-elution amount curves of the linear ethylene copolymers (P-2) and (P-3) to be used in the invention, measured by temperature rising elution fractionation method.

BEST MODE FOR CARRYING OUT THE INVENTION

Each component of the polyolefin resin composition to be used in the invention is described in detail below.

Linear ethylene (co)polymer (component P)

An ethylene homopolymer or an ethylene-α-olefin copolymer can be exemplified as the linear ethylene (co)polymer in the invention, wherein its physical properties satisfy requirements of having (a) a density of from 0.86 to 0.97 g/cm$^3$, (b) a melt flow rate of from 0.01 to 100 g/10 minutes and (c) a molecular weight distribution (Mw/Mn) of from 1.5 to 5.0, and a linear ethylene (co)polymer (P-1) which further satisfies a requirement of having (d) a composition distribution parameter Cb of 2.00 or less is preferable.

The α-olefin may have preferably from 3 to 20, more preferably from 3 to 12, carbon atoms. For example, propylene, 1-butene, 1-pentene, 4-methyl-1-pentene, 1-hexene, 1-octene, 1-decene, 1-dodecene and the like can be cited. It may be alone as a co-monomer or a combination of two or more. Also, it is desirable that the content of these α-olefins is selected within the range of 30 mol% or less, preferably from 3 to 20 mol%, in total in the copolymer.

The aforementioned requirement (a) of the linear ethylene (co)polymer in the invention, namely density, is from 0.86 to 0.97 g/cm$^3$, and when molded into films, laminates and the like, it is within the range of preferably from 0.88 to 0.945 g/cm$^3$, more preferably from 0.90 to 0.93 g/cm$^3$, and most preferably from 0.91 to 0.93 g/cm$^3$. When the density is less than 0.86 g/cm$^3$, it entails not only inferior rigidity due to too much softness but also poor heat resistance and inferior anti-blocking ability, so that workability at the time of molding worsens. Also, the value exceeding 0.97 g/cm$^3$ has a possibility of entailing insufficient tear strength and impact resistance due to too much hardness.

The melt flow rate (b) (hereinafter referred to as "MFR") of the linear ethylene (co)polymer in the invention is within the range of from 0.01 to 100 g/10 minutes, preferably from 0.1 to 100 g/10 minutes, more preferably from 0.2 to 50 g/10 minutes, and most preferably from 0.5 to 40 g/10 minutes. The MFR value if less than 0.01 g/10 minutes would entail inferior workability (draw down ability or the like) and if larger than 100 g/10 minutes would entail reduction of mechanical strength such as impact resistance.

The molecular weight distribution Mw/Mn (c) of the linear ethylene (co)polymer in the invention is within the range of from 1.5 to 5.0. It is more preferably from 1.5 to 4.5, most preferably from 1.8 to 4.0 and particularly preferably from 2.0 to 3.0. The Mw/Mn value if less than 1.5 would entail inferior molding workability and if larger than 5.0 would entail inferior mechanical strength such as impact resistance.

In this connection, the aforementioned molecular weight distribution (Mw/Mn) is obtained by measuring weight average molecular weight (Mw) and number average molecular weight (Mn) by gel permeation chromatography (GPC) and calculating their ratio (Mw/Mn).

The linear ethylene (co)polymer (P-1) in the invention having (d) a composition distribution parameter (Cb) of 2.00 or less is suitably used, because blocking hardly occurs and heat sealing property is improved when laminated. In addition, it does not cause hygienic problems because of the reduced bleeding of low molecular weight or high branching degree components on the resin surface.

In this connection, the composition distribution parameter (Cb) is measured in the following manner.

A (co)polymer sample is dissolved in antioxidant-added orthodichlorobenzene (ODCB) by heating at 135°C to a concentration of 0.2% by weight, transferred in a column packed with diatomaceous earth (Celite 545) and then cooled to 25°C at a cooling rate of 0.1°C/min to effect deposition of the sample on the celite surface. Next, ODCB is passed at a constant flow rate through the column in which the sample is deposited, while the column temperature is increased stepwise to 120 °C at 5°C intervals. Thus, a solution containing an eluted component corresponding to each temperature is collected. This solution is cooled and then mixed with methanol to effect precipitation of the sample, which is subsequently filtered and dried to obtain an elution sample at each temperature. Weight fraction and blanching degree (the number of branches per 1,000 carbon atoms) of each of the thus fractionated samples are measured. The branching degree is calculated by measuring using $^{13}C$-NMR.

Regarding each of the fractions collected at from 30°C to 90°C by this method, correction of the branching degree is carried out in the following manner. That is, the measured blanching degree is plotted against the elution temperature, and a calibration curve is prepared by approximating their correlation to a straight line by least square method. Correlation coefficient of this approximation is sufficiently large. The value obtained from this calibration curve is used as the branching degree of each fraction. In this connection, this correction is not carried out on the fractions collected at an elution temperature of 95°C or more, because a linear relation is not always realized between the elution temperature and branching degree.

Next, weight fraction $w_i$ of each fraction is divided by a changing amount of the branching degree $b_i$ per 5°C elution temperature ($b_i$ - $b_{i-1}$) to obtain a relative concentration $c_i$, and a composition distribution curve is obtained by plotting the relative concentration against the branching degree. By dividing the composition distribution curve at a constant width, the composition distribution parameter Cb is calculated based on the following formula.

$$Cb = (\Sigma c_j \bullet b_j^{\,2} / \Sigma c_j \bullet b_j) / (\Sigma c_j \bullet b_j / \Sigma c_j)$$

In this case, $c_j$ and $b_j$ are respectively relative concentration and branching degree in the j-th plot. The composition distribution parameter Cb becomes 1.0 when composition of the sample is uniform and becomes large as the composition distribution is broadened.

In this connection, many methods have been proposed for expressing the composition distribution of ethylene (co)polymers. For example, according to JP-A-60-88016, ration of weight average branching degree (Cw) to number average branching degree (Cn) is obtained by carrying out a numerical treatment on an assumption that cumulative weight fraction takes a specific distribution (logarithmic normal distribution) against the number of branches of each of the fractionated samples obtained by carrying out solvent fractionation of the sample. The accuracy of this approximate calculation is reduced when the number of branches and cumulative weight fraction of the sample deviate from the logarithmic normal distribution and, when a commercially available LLDPE is measured, the correlation coefficient R2 is considerably low and accuracy of the value is not sufficient. In addition, though these Cw/Cn measuring method and numerical treatment are different from those of the Cb of the invention, when their numerical values are boldly compared, the value of Cw/Cn is considerably larger than that of Cb.

The aforementioned linear ethylene (co)polymer in the invention can be produced by the use of well known catalyst such as a Ziegler type catalyst or a Phillips type catalyst.

Particularly, those prepared by the following two embodiments are particularly desirable. One of these embodiments is an ethylene (co)polymer (P-2) which satisfies the following requirements (d'), (e) and (f) in addition to the aforementioned (a) to (c):

(d') The composition distribution parameter Cb is from 1.08 to 2.0;

(e) Substantially plural number of peaks are present in the elution temperature-elution amount curve by temperature rising elution fractionation method; and

(f) The orthodichlorobenzene-soluble content X (wt %) at 25°C and density d and melt flow rate (MFR) satisfy the following relationship:

(i) when d - 0.008 log MFR ≥ 0.93,

$$X < 2.0$$

(ii) when d - 0.008 log MFR < 0.93,

$$X < 9.8 \times 10^{3} \times (0.9300 - d + 0.008 \log MFR)^{2} + 2.0.$$

Particularly preferred among them include those which are obtained by homopolymerization or copolymerization of ethylene or ethylene with an α-olefin having from 3 to 20 carbon atoms in the presence of a catalyst containing

at least an organic cyclic compound having a conjugated double bond and a compound of a Group IV transition metal in the periodic table.

The other one of these embodiments is a linear ethylene (co)polymer (P-3) which satisfies the following requirements (d'') and (e') in addition to the aforementioned (a) to (c):

(d'') The composition distribution parameter Cb is from 1.01 to 1.2; and
(e') Substantially one peak is present in the elution temperature-elution amount curve by temperature rising elution fractionation method.

Preferred among them is a linear ethylene (co)polymer obtained in the presence of at least one catalyst containing a ligand having cyclopentadienyl skeleton and a transition compound of the Group IV in the periodic table, obtained in the presence of at least one catalyst containing a ligand having cyclopentadienyl skeleton and a transition compound of the Group IV in the periodic table.

In this connection, the linear ethylene (co)polymer (P-2) is a special homopolymer or copolymer of ethylene in which the peak of elution temperature-elution amount curve obtained by temperature rising elution fractionation (TREF) is present substantially in plural numbers as shown in Fig. 1, and the linear ethylene (co)polymer (P-3) is a typical metallocene catalyst-aided homopolymer or copolymer of ethylene which has substantially one peak in the elution temperature-elution amount curve obtained by the temperature rising elution fractionation (TREF) as shown in Fig. 2 and is obtained in the presence of at least one catalyst containing a ligand having cyclopentadienyl skeleton and a compound of a Group IV transition metal in the periodic table, so that the linear ethylene (co)polymers (P-2) and (P-3) can be clearly distinguished from each other.

<u>Linear ethylene (co)polymer (P-2)</u>

In the linear ethylene (co)polymer (P-2), it is desirable that the molecular weight distribution (Mw/Mn) (c) is within the range of from 1.5 to 5.0, preferably from 1.5 to 4.5, more preferably from 1.8 to 4.0 and most preferably from 2.0 to 3.0.

Also, in the linear ethylene (co)polymer (P-2), it is desirable that the composition distribution parameter Cb (d') is within the range of preferably from 1.08 to 2.00, more preferably from 1.12 to 1.70 and most preferably from 1.15 to 1.50. The value if less than 1.08 would entail poor hot tack characteristic and if larger than 2.00 would entail reduction of transparency and cause a problem of, for example, forming a high polymer gel in the molded product.

As described in the foregoing, in the case of the special linear ethylene (co)polymer (P-2) of the present invention, (e) plural numbers of peaks are present in the elution temperature-elution amount curve obtained by temperature rising elution fractionation (TREF). It is particularly desirable that these plural peak temperatures are present between 85°C and 100°C. By the presence of these peaks, melting point becomes high, crystallinity is increased and heat resistance and rigidity of moldings are improved.

Measuring method of the TREF is as follows. A sample is dissolved in antioxidant (e.g., butylhydroxytoluene)-added ODCB by heating at 135°C to a concentration of 0.05% by weight. A 5-ml portion of this sample solution is injected in a column packed with glass beads and then cooled to 25°C at a cooling rate of 0.1°C/min to effect deposition of the sample on the glass bead surface. Next, ODCB is passed at a constant flow rate through the column, while the column temperature is increased at a constant rate of 50°C/hr, thereby allowing the sample to elute successively. In this case, concentration of the sample eluted in the solvent is continuously detected by measuring absorbance with respect to the wavenumber of the asymmetric stretching vibration of methylene, i.e., 2925 $cm^{-1}$, using an infrared detector. By quantitatively analyzing concentration of the ethylene (co)polymer in the solution based on this data, the relationship between elution temperature and elution rate is calculated.

According to the TREF analysis, changes in the elution rate against temperature change can be analyzed continuously with an extremely small amount of samples, so that it renders possible the detection of relatively fine peaks which cannot be detected by the fractionation method.

Also, as described in the foregoing, according to component (P-2), it is desirable that the (f) ODCB-soluble fraction content X (% by weight) at 25°C and density d and MFR satisfy the relationship of, when the values of d and MFR satisfy;

(i) $d - 0.008 \log MFR \geq 0.93$,

X is less than 2.0% by weight, preferably less than 1% by weight, and

(ii) in the case of $d - 0.008 \log MFR < 0.93$,

$X < 9.8 \times 10^3 \times (0.9300 - d + 0.008 \log MFR)^2 + 2.0$, preferably,
$X < 7.4 \times 10^3 \times (0.9300 - d + 0.008 \log MFR)^2 + 1.0$, more preferably,
$X < 5.6 \times 10^3 \times (0.9300 - d + 0.008 \log MFR)^2 + 0.5$.

In this connection, the aforementioned amount X of the ODCB-soluble fraction at 25°C is measured in the following manner. A 0.5-g portion of a sample is heated in 20 ml of ODCB at 135°C for 2 hours to completely dissolve the sample and then cooled to 25°C. This solution is allowed to stand overnight at 25°C and then filtered through a Teflon filter to collect the filtrate. Absorption peak strength of this filtrate as the sample solution is measured at around the wavenumber of the asymmetric stretching vibration of methylene, i.e., 2925 $cm^{-1}$, using an infrared spectrometer, and concentration of the sample is calculated using a calibration curve prepared in advance. Based on this value, amount of the ODCB-soluble fraction at 25°C is obtained.
The ODCB-soluble fraction at 25°C include high branching degree components and low molecular weight components contained in the ethylene (co)polymer, which cause reduction of heat resistance and stickiness of the surface of moldings and also cause hygienic problems and blocking of the inner surface of moldings, so that a smaller content is desirable. The amount of ODCB-soluble fraction is influenced by the α-olefin content and molecular weight, namely density and MFR, of the copolymer as a whole.
In consequence, when these indexes density, MFR and ODCB-soluble fraction content satisfy the aforementioned relationship, it means that uneven distribution of α-olefin contained in the copolymer as a whole is small.
Since the linear ethylene (co)polymer (P-2) has narrow molecular weight distribution and composition distribution, this is a polymer which has large mechanical strength, is excellent in heat sealing property, anti-blocking ability and the like and has good heat resistance.
It is desirable to polymerize the linear ethylene (co)polymer (P-2), particularly using the following catalysts a1 to a4.

a1: A compound represented by a general formula $Me^1R^1_pR^2_q(OR^3)_rX^1_{4-p-q-r}$.
(In the formula, $Me^1$ is zirconium, titanium or hafnium, $R^1$ and $R^3$ are respectively a hydrocarbon group having from 1 to 24 carbon atoms or a trialkylsilyl group, $R^2$ is a 2,4-pentanedionato ligand or a derivative thereof, a benzoylmethanato ligand, or a benzoylacetonato ligand or a derivative thereof, $X^1$ is a halogen atom such as fluorine, iodine, chlorine or bromine, and p, q and r are integers which satisfy respective ranges of $0 \le p < 4$, $0 \le q < 4$, $0 \le r < 4$ and $0 \le p + q + r \le 4$.)
a2: A compound represented by a general formula $Me^2R^4_m(OR^5)_nX^2_{z-m-n}$.
(In the formula, $Me^2$ is an element of the Groups I to III in the periodic table, $R^4$ and $R^5$ are respectively a hydrocarbon group having from 1 to 24 carbon atoms, $X^2$ is a halogen atom or hydrogen atom (with the proviso that $Me^2$ is limited to an element of the Group III in the periodic table when $X^2$ is hydrogen atom), z is the valence of $Me^2$, and m and n are integers which satisfy respective ranges of $0 \le m \le z$ and $0 \le n \le z$, wherein $0 \le m + n \le z$.)
a3: An organic cyclic compound having a conjugated double bond.
a4: A modified organic aluminumoxy compound and/or a boron compound, which contains Al-O-Al bond.

Each of these catalyst components are described in detail.
Regarding the aforementioned catalyst component a1, $Me^1$ in the formula of a compound represented by a general formula $Me^1R^1_pR^2_q(OR^3)_rX^1_{4-p-q-r}$ is zirconium, titanium or hafnium, and two or more of them can be used, but it is particularly desirable to contain zirconium which results in excellent weather resistance of the copolymer. The hydrocarbon group of $R^1$ and $R^3$ having from 1 to 24 carbon atoms may have more preferably from 1 to 12, most preferably from 1 to 8, carbon atoms.
Its illustrative examples include methyl group, ethyl group, propyl group, isopropyl group, butyl group and the like alkyl groups; vinyl group, allyl group and the like alkenyl groups; phenyl group, tolyl group, xylyl group, mesityl group, indenyl group, naphthyl group and the like aryl groups; and benzyl group, trityl group, phenethyl group, styryl group, benzhydryl group, phenylbutyl group, neophyl group and the like aralkyl groups. These may have a branch.
Examples of the compound represented by the general formula of the aforementioned catalyst component a1 include tetramethylzirconium, tetraethylzirconium, tetrabenzylzirconium, tetrapropoxyzirconium, tripropoxymonochlorozirconium, dipropoxydichlorozirconium, tetrabutoxyzirconium, tributoxychlorozirconium, dibutoxydichlorozirconium, tetrabutoxytitanium, tetrabutoxyhafnium and the like, of which tetrapropoxyzirconium, tetrabutoxyzirconium and the like $Zr(OR)_4$ compounds are preferable, and these may be used as a mixture of two or more.
Also, the 2,4-pentanedionato ligand of $R^2$ or a derivative thereof include tetra(2,4-pentanedionato)zirconium, zirconium tri(2,4-pentanedionato)chloride, zirconium di(2,4-pentanedionato)dichloride, (2,4-pentanedionato) trichloride, zirconium di(2,4-pentanedionato)diethoxide, zirconium di(2,4-pentanedionato)di-n-propoxide, zirconium (2,4-pentanedionato)di-n-butoxide, di(2,4-pentanedionato)dibenzylzirconium, di(2,4-pentanedionato)dineophylzirconium, zirconium di(2,4-pentanedionato)di-n-butoxide and the like. Also, illustrative examples of benzoylmethanato lig-

and and benzoylacetonato ligand and their derivatives include tetra(dibenzoylmethanato)zirconium, zirconium di(dibenzoylmethanato)diethoxide, zirconium di(dibenzoylmethanato)di-n-propoxide, zirconium di(dibenzoylacetonato)diethoxide, zirconium di(dibenzoylacetonato)di-n-propoxide, zirconium (dibenzoylacetonato)di-n-butoxide and the like.

Regarding the aforementioned catalyst component a2, $Me^2$ in the formula of a compound represented by a general formula $Me^2R^4{}_m(OR^{5)}{}_nX^2{}_{z-m-n}$ is an element of the Groups I to III in the periodic table, such as lithium, sodium, potassium, magnesium, calcium, zinc, boron, aluminum or the like. $R^4$ and $R^5$ each is a hydrocarbon group having from 1 to 24, more preferably from 1 to 12, most preferably from 1 to 8 carbon atoms, and illustrative examples thereof include methyl group, ethyl group, propyl group, isopropyl group, butyl group and the like alkyl groups; vinyl group, allyl group and the like alkenyl groups; phenyl group, tolyl group, xylyl group, mesityl group, indenyl group, naphthyl group and the like aryl groups; and benzyl group, trityl group, phenethyl group, styryl group, benzhydryl group, phenylbutyl group, neophyl group and the like aralkyl groups. These may have a branch. $X^2$ is a halogen atom such as fluorine, iodine, chlorine or bromine or hydrogen atom. However, when $X^2$ is hydrogen atom, $Me^2$ is limited to boron, aluminum or the like element of the Group III in the periodic table.

Examples of the compound represented by the general formula of the aforementioned catalyst component a2 include derivatives such as of methyllithium, ethyllithium and the like organic lithium compounds; dimethylmagnesium, diethylmagnesium, methylmagnesium chloride, ethylmagnesium chloride and the like organic magnesium compounds; dimethylzinc, diethylzinc and the like organic zinc compounds; trimethylboron, triethylboron and the like organic boron compounds; and trimethylaluminum, triethylaluminum, triisobutylaluminum, trihexylaluminum, tridecylaluminum, diethylaluminum chloride, ethylaluminum dichloride, ethylaluminum sesquichloride, diethylaluminum ethoxide, diethylaluminum hydride and the like organic aluminum compounds.

The organic cyclic compound of the catalyst component a3 having a conjugated double bond includes a cyclic hydrocarbon compound which has one or two or more cyclic rings having two or more, preferably from 2 to 4, more preferably 2 or 3, conjugated double bonds and has from 4 to 24, preferably from 4 to 12, carbon atoms in total; a cyclic hydrocarbon compound in which the above cyclic hydrocarbon compound is partly substituted by from 1 to 6 hydrocarbon residues (typically, alkyl groups or aralkyl groups having from 1 to 12 carbon atoms); an organic silicon compound which has one or two or more cyclic rings having two or more, preferably from 2 to 4, more preferably 2 or 3, conjugated double bonds and has from 4 to 24, preferably from 4 to 12, carbon atoms in total; and an organic silicon compound in which the above cyclic hydrocarbon group is partly substituted by from 1 to 6 hydrocarbon residues or an alkali metal salt(sodium or lithium salt). Compounds having cyclopentadiene structure in any of the molecules are particularly preferred.

Examples of the aforementioned preferred compounds include cyclopentadiene, indene and azulene, or alkyl, aryl, aralkyl, alkoxy or aryloxy derivatives thereof. Compounds in which these compounds are bonded (crosslinked) via an alkylene group (having generally from 2 to 8, preferably 2 or 3, carbon atoms) are also can be used suitably.

The organic silicon compound having a cyclic hydrocarbon group can be represented by the following general formula.

$$A_LSiR_{4-L}$$

In this formula, A is the aforementioned cyclic hydrogen group exemplified by cyclopentadienyl group, substituted cyclopentadienyl group, indenyl group and substituted indenyl group, R is a hydrocarbon group having from 1 to 24, preferably from 1 to 12, carbon atoms, such as methyl group, ethyl group, propyl group, isopropyl group, butyl group or the like alkyl group; methoxy group, ethoxy group, propoxy group, butoxy group or the like alkoxy group; phenyl group or the like aryl group; phenoxy group or the like aryloxy group; or benzyl group or the like aralkyl groups, or hydrogen, and L is $1 \leq L \leq 4$, preferably $1 \leq L \leq 3$.

Illustrative examples of the organic cyclic hydrocarbon compound of the aforementioned component a3 include cyclopentadiene, methylcyclopentadiene, ethylcyclopentadiene, 1,3-dimethylcyclopentadiene, indene, 4-methyl-1-indene, 4,7-dimethylindene, cycloheptatriene, methylcycloheptatriene, cyclooctatetraene, azulene, fluorene, methylfluorene or the like cyclopolyene having from 5 to 24 carbon atoms or substituted cyclopolyene, monocyclopentadienylsilane, biscyclopentadienylsilane, triscyclopentadienylsilane, monoindenylsilane, bisindenylsilane, trisindenylsilane and the like.

Regarding the modified organic aluminumoxy compound and/or a boron compound of the catalyst component a4, which contains Al-O-Al bond, a modified organic aluminumoxy compound having generally from 1 to 100, preferably from 1 to 50, Al-O-Al bonds, generally called aluminoxane, is obtained by allowing an alkyl aluminum compound to react with water. The modified organic aluminumoxy compound may be either linear or cyclic. Examples of the boron compound include tetra(pentafluorophenyl)boric acid triethylaluminum(triethylammoniumtetra(pentafluorophenyl) borate, tetra(pentafluorophenyl)boric acid dimethylanlinium(dimethylanliniumtetra(pentafluorophenyl) borate, butylammonium tetra(pentafluorophenyl)borate, N,N-dimethylanlinium tetra(pentafluorophenyl)borate, N,N-dimethylanlinium tetra(pentafluorophenyl)borate and the like.

The reaction of an organic aluminum with water is carried out generally in an inert hydrocarbon. As the inert hydrocarbon, pentane, hexane, heptane, cyclohexane, benzene, toluene, xylene and the like aliphatic, alicyclic and aromatic hydrocarbons are preferred.

It is desirable that the reaction ratio of water and organic aluminum compound (water/Al molar ratio) is generally from 0.25/1 to 1.2/1, preferably from 0.5/1 to 1/1.

The aforementioned catalyst components a1 to a4 may be used by mixing and contacting them as such, but it is desirable to use by supporting them preferably on an inorganic carrier and/or a granular polymer carrier (a5). Examples of the inorganic carrier and/or granular polymer carrier (a5) include a carbonaceous material, a metal, a metal oxide, a metal chloride, a metal carbonate, a mixture thereof, a thermoplastic resin, a thermosetting resin and the like. Iron, aluminum, nickel and the like can be cited as suitable metals to be used in the inorganic carrier.

Illustrative examples thereof include $SiO_2$, $Al_2O_3$, MgO, $ZrO_2$, $TiO_2$, $B_2O_3$, CaO, ZnO, BaO, $ThO_2$, $V_2O_5$, $Cr_2O_3$ or mixtures thereof, and $SiO_2$-$Al_2O_3$, $SiO_2$-$V_2O_5$, $SiO_2$-$TiO_2$, $SiO_2$-MgO, $SiO_2$-$Cr_2O_3$ and the like. Preferred among them are those comprising at least one component selected from the group consisting of $SiO_2$ and $Al_2O_3$, as the main component.

Also, any of thermoplastic resins and thermosetting resins can be used as the organic compound, and their illustrative examples include granular polyolefin, polyester, polyamide, polyvinyl chloride, methyl poly(meth)acrylate, polystyrene, polynorbornene, various natural polymers and mixtures thereof.

The aforementioned inorganic carrier and/or granular polymer carrier may be used as such, but, preferably, these carriers may be contact-treated with an organic aluminum compound or a modified organic aluminumoxy compound containing Al-O-Al bond as a pretreatment and then used as component a5.

<u>Linear ethylene (co)polymer (P-3)</u>

The linear ethylene (co)polymer (P-3) in the invention is an ethylene homopolymer or an ethylene-α-olefin copolymer produced using at least one catalyst (hereinafter referred to as "metallocene catalyst") which contains a ligand having cyclopentadienyl skeleton and a transition compound of the Group IV in the periodic table, and it is desirable that it satisfies the aforementioned requirements (a) and (b), and the molecular weight distribution (c) is within the range of from 1.5 to 5.0, preferably from 1.5 to 4.5, more preferably from 1.8 to 4.0, most preferably from 2.0 to 3.0. Also, in the linear ethylene (co)polymer (P-3), it is desirable that the composition distribution parameter (d) is within the range of preferably from 1.01 to 1.2, more preferably from 1.02 to 1.18, most preferably from 1.03 to 1.17.

This metallocene catalyst-aided ethylene homopolymer or copolymer (P-3) is obtained by copolymerizing ethylene with an α-olefin having from 3 to 20 carbon atoms in the presence of a catalyst which contains a compound of a Group IV transition metal in the periodic table, having a ligand that has cyclopentadienyl skeleton, and also a co-catalyst, an organic aluminum compound and a carrier as occasion demands.

Examples of the cyclopentadienyl skeleton of the comound of a Group IV transition metal in the periodic table, which has a ligand having cyclopentadienyl skeleton and is the catalyst for use in the production of this ethylene homopolymer or ethylene-α-olefin copolymer (P-3), include cyclopentadienyl group, a substituted cyclopentadienyl group and the like. Examples of the substituted cyclopentadienyl group include a substituted cyclopentadienyl group which has at least one substituent group selected from a hydrocarbon group having from 1 to 10 carbon atoms, silyl group, a silyl-substituted alkyl group, a silyl-substituted aryl group, cyano group, a cyanoalkyl group, a cyanoaryl group, a halogen atom, a haloalkyl group, a halosilyl group and the like. The substituted cyclopentadienyl group may have two or more substituent groups, and these substituent groups may be mutually bonded to form a ring.

Examples of the hydrocarbon group having from 1 to 10 carbon atoms include an alkyl group, a cycloalkyl group, an aryl group, an aralkyl group and the like, and their illustrative examples include methyl group, ethyl group, n-propyl group, isopropyl group, n-butyl group, isobutyl group, sec-butyl group, t-butyl group, pentyl group, hexyl group, octyl group, 2-ethylhexyl group, decyl group and the like alkyl groups; cyclopentyl group, cycloalkyl group and the like cycloalkyl groups; phenyl group, tolyl group and the like aryl groups; and benzyl group, neophyl group and the like aralkyl groups. Among them, an alkyl group is preferable.

Illustrative examples of suitable substituted cyclopentadienyl group include methylcyclopentadienyl group, ethylcyclopentadienyl group, n-hexylcyclopentadienyl group, 1,3-dimethylcyclopentadienyl group, 1,3-n-butylmethylcyclopentadienyl group, 1,3-n-propylmethylcyclopentadienyl group and the like.

Among these groups, a cyclopentadienyl group substituted by an alkyl group having three or more carbon atoms, particularly a 1,3-substituted cyclopentadienyl group, is desirable as the substituted cyclopentadienyl group of the invention.

Regarding the case of substituted cyclopentadienyl group in which substituent groups, namely hydrocarbons, are mutually bonded to form one or two or more rings, suitable examples include indenyl group, substituted indenyl group substituted by a substituent group such as a hydrocarbon group (an alkyl group or the like) having from 1 to 8 carbon atoms, naphthyl group, substituted naphthyl group substituted by a substituent group such as a hydrocarbon group (an alkyl group or the like) having from 1 to 8 carbon atoms, substituted fluorenyl group substituted by a substituent group such as a hydrocarbon group (an alkyl group or the like) having from 1 to 8 carbon atoms and the like.

Zirconium, titanium, hafnium and the like can be exemplified as the transition metal in the compound of a Group IV transition metal in the periodic table, which contains a ligand having cyclopentadienyl skeleton, of which zirconium is particularly desirable. The transition metal compound generally has 1 to 3 ligands having cyclopentadienyl skeleton, and when it has two or more of them, they may be mutually bonded through a crosslinking group. In this connection, an alkylene group having from 1 to 4 carbon atoms, an alkylsilanediyl group, silanediyl group and the like can be exemplified as the crosslinking group.

Regarding the compound of a Group IV transition metal in the periodic table, typical examples of ligands other than the ligand having cyclopentadienyl skeleton include hydrogen, a hydrocarbon group having from 1 to 20 carbon atoms (an alkyl group, an alkenyl group, an aryl group, an alkylaryl group, an aralkyl group, a polyenyl group or the like), a halogen, a meta-alkyl group, a meta-aryl group and the like.

The following describes their illustrative examples. Examples of the dialkyl metallocene include dimethyl bis(cyclopentadienyl)titanium dimethyl, bis(cyclopentadienyl)titanium diphenyl, bis(cyclopentadienyl)zirconium dimethyl, bis(cyclopentadienyl)zirconium diphenyl, bis(cyclopentadienyl)hafnium dimethyl, bis(cyclopentadienyl)hafnium diphenyl and the like. Examples of the monoalkyl metallocene include bis(cyclopentadienyl)titanium methyl chloride, bis(cyclopentadienyl)titanium phenyl chloride, bis(cyclopentadienyl)zirconium methyl chloride, bis(cyclopentadienyl)zirconium phenyl chloride and the like.

Also included are pentamethylcyclopentadienyltitanium trichloride, pentaethylcyclopentadienyltitanium trichloride, bis(pentamethylcyclopentadienyl)titanium diphenyl and the like, which are monocyclopentadienyl titanocene.

Examples of the substituted bis(cyclopentadienyl)titanium compound include bis(indenyl)titanium diphenyl or dichloride and bis(methylcyclopentadienyl)titanium diphenyl or dichloride, or bis(1,2-dimethylcyclopentadienyl)titanium diphenyl or dichloride and bis(1,2-diethylcyclopentadienyl)titanium diphenyl or dichloride or other dihalide complex as dialkyl, trialkyl, tetraalkyl or pentaalkyl cyclopentadienyltitanium compounds, or dimethylsilylcyclopentadienyltitanium diphenyl or dichloride and methylenedicyclopentadienyltitanium diphenyl, dichloride or other dihalide complex as silicon-, amine- or carbon-linked cyclopentadiene complexes.

Examples of the zirconocene compound include pentamethylcyclopentadienylzirconium trichloride, pentaethylcyclopentadienylzirconium trichloride and bis(pentamethylcyclopentadienyl)zirconium trichloride, or bis(ethylcyclopentadienyl)zirconium dimethyl, bis(methylcyclopentadienyl)zirconium dimethyl, bis(n-butylcyclopentadienyl)zirconium dimethyl and their haloalkyl or dihalide complexes as alkyl-substituted cyclopentadiene, bis(pentamethylcyclopentadienyl)zirconium dimethyl, bis(1,2-dimethylcyclopentadienyl)zirconium diphenyl and their dihalide complexes as dialkyl, trialkyl, tetraalkyl or pentaalkyl cyclopentadiene, or dimethylsilylcyclopentadienyizirconium dimethyl or dichloride, methylenedicyclopentadienylzirconium dimethyl or dihalide and methylenedicyclopentadienylzirconium dimethyl or dihalide as silicon- or carbon-linked cyclopentadiene complexes.

Examples of other metallocene include bis(cyclopentadienyl)hafnium dichloride, bis(cyclopentadienyl)hafnium dimethyl, bis(cyclopentadienyl)vanadium dichloride and the like.

Examples of other compound of a Group IV transition metal in the periodic table, useful in the invention, include those represented by the following chemical formula in which a ligand having cyclopentadienyl skeleton and other ligand and a transition metal atom form a ring.

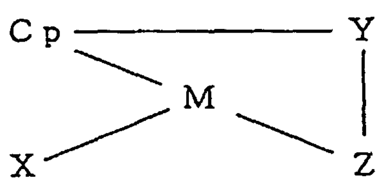

In the above chemical formula, Cp is the aforementioned ligand having cyclopentadienyl skeleton, X is hydrogen, a halogen, an alkyl group having from 1 to 20 carbon atoms, an arylsilyl group, an aryloxy group, an alkoxy group, amido group, silyloxy group or the like, Y is a divalent group selected from the group consisting of $SiR_2$, $CR_2$, $SiR_2SiR_2$, $CR_2CR_2$, CR=CR, $SiR_2CR_2$, $BR_2$ and BR, and Z is a divalent neutral ligand selected from the group consisting of -O-, -S-, -NR-, -PR- or OR, SR, $NR_2$ and $PR_2$. In this case, R is hydrogen or an alkyl group having from 1 to 20 carbon atoms, an aryl group, silyl group, an alkyl halide group or an aryl halide group, or two or more of the group R

from Y, Z or both of Y and Z form a condensed ring system. M is a transition metal atom of the Group IV in the periodic table.

Examples of the compound represented by this chemical formula include (t-butylamido)(tetramethylcyclopentadienyl)-1,2-ethenediylzirconium dichloride, (t-butylamido)(tetramethylcyclopentadienyl)-1,2-ethenediyltitanium dichloride, (methylamido)(tetramethylcyclopentadienyl)-1,2-ethenediylzirconium dichloride, (methylamido)(tetramethylcyclopentadienyl)-1,2-ethenediyltitanium dichloride, (ethylamido)(tetramethylcyclopentadienyl)methylenetitanium dichloride, (t-butylamido)dimethyl(tetramethylcyclopentadienyl)silanetitanium dichloride, (t-butylamido)dimethyl(tetramethylcyclopentadienyl)silanezirconium dibenzyl, (benzylamido)(tetramethylcyclopentadienyl)silanetitanium dichloride, (phenylphosphido)(tetramethylcyclopentadienyl)silanetitanium dichloride and the like.

Examples of the co-catalyst according to the invention include those which can effect the aforementioned transition metal compound of the Group IV in the periodic table as a polymerization catalyst or can equilibrate catalytically activated state of ionic charges. Examples of the co-catalyst to be used in the invention include benzene-soluble aluminoxane of an organic aluminumoxy compound, a benzene-insoluble organic aluminumoxy compound, a boron compound, lanthanoid salt such as of lanthanum oxide, tin oxide and the like.

Among them, aluminoxane is most preferable.

In addition, the catalyst may be used by supporting on a carrier of an inorganic or organic compound. As the carrier, a porous oxide of an inorganic or organic compound is desirable. Its illustrative examples include $SiO_2$, $Al_2O_3$, $MgO$, $ZrO_2$, $TiO_2$, $B_2O_3$, $CaO$, $ZnO$, $BaO$, $ThO_2$, $V_2O_5$ or mixtures thereof, and $SiO_2$-$Al_2O_3$, $SiO_2$-$V_2O_5$, $SiO_2$-$TiO_2$, $SiO_2$-$NgO$, $SiO_2$-$Cr_2O_3$ and the like.

Examples of the organic aluminum compound include a trialkylaluminum such as triethylaluminum, triisopropylaluminum or the like; a dialkylaluminum halide; an alkylaluminum sesquihalide; an alkylaluminum dihalide; and an alkylaluminum hydride, an organic aluminum alkoxide and the like.

<u>Production method of linear ethylene (co)polymers</u>

The linear ethylene (co)polymers in the invention are produced by vapor phase polymerization substantially free from solvents, slurry polymerization, solution polymerization or the like method in the presence of the aforementioned catalyst, under such condition that oxygen, water and the like are substantially cut off, and in the presence or absence of an inert hydrocarbon solvent such as butane, pentane, hexane, heptane or the like aliphatic hydrocarbon, benzene, toluene, xylene or the like aromatic hydrocarbon or cyclohexane, methylcyclohexane or the like alicyclic hydrocarbon. Though the polymerization conditions are not particularly limited, it is desirable that the polymerization temperature is generally from 15 to 350°C, preferably from 20 to 200°C, more preferably from 50 to 110°C, and the polymerization pressure is generally from ordinary pressure to 70 $kg/cm^2G$, preferably from ordinary pressure to 20 $kg/cm^2G$, in the case of a low or middle pressure method, or generally 1,500 $kg/cm^2G$ or less in the case of a high pressure method. In the case of the low or middle pressure method, it is desirable that the polymerization period is generally from 3 minutes to 10 hours, preferably from 5 minutes to 5 hours. In the case of the high pressure method, it is desirable that the period is generally from 1 minute to 30 minutes, preferably from 2 minutes to 20 minutes. Also, the polymerization method is not particularly limited, and it can be carried out not only by a one-stage polymerization method but also by a multi-stage polymerization method of two or more stages in which hydrogen concentration, monomer concentration, polymerization pressure, polymerization temperature, catalyst and the like polymerization conditions differ from one another.

According to the linear ethylene (co)polymers in the invention, when a catalyst which contains substantially no halogens such as chlorine is used at the time of polymerization, the resulting polymer also contains no halogens, so that it has excellent chemical stability and hygienic property and can be used suitable in food-, hygiene- and medicine-related applications. Also, when it is applied to packaging materials and containers related to electrical parts, electrical wire members and electronic ovens, it shows a characteristic in that generation of rust on the peripheral metal parts and the like is inhibited.

According to the resin component (I) in the invention, the aforementioned linear ethylene (co)polymer (P) can be blended with other polyolefin resin for the purpose of improving molding workability and adhesive property and of improving heat resistance and the like performances. It is desirable to blend them within the range of 5% by weight or more of the linear ethylene (co)polymer (P) and less than 95% by weight of the other polyolefin resin, preferably 50% by weight or more of the (P) and 50% by weight or less of the other polyolefin, more preferably 60% by weight or more of the (P) and 40% by weight or less of the other polyolefin.

Examples of the aforementioned other polyolefin resin include a low density polyethylene obtained by high-pressure radical polymerization (HpLDPE) having a density of from 0.91 to 0.94 $g/cm^3$ and a melt flow rate of from 0.01 to 100 g/10 minutes, an ethylene-vinyl acetate copolymer or the like copolymer of ethylene with a vinyl ester, an ethylene-ethyl acrylate copolymer or the like copolymer of ethylene with (meth)acrylic acid or a derivative thereof, an ethylene-maleic anhydride copolymer or the like copolymer of ethylene with an $\alpha,\beta$ unsaturated carboxylic acid, ionomer and

the like. As other examples, a very low density polyethylene (VLDPE) having a density of from 0.86 to less than 0.91 g/$cm^3$, a linear low density polyethylene (LLDPE) having a density of from 0.91 to 0.94 g/$cm^3$, a high density polyethylene (HDPE) having a density of 0.94 g/$cm^3$ or more, a polypropylene resin (PP) and the like can be cited. Among them, HpLDPE is preferable.

(II) Epoxy compound

In the polyolefin resin composition of the invention, an epoxy compound containing two or more epoxy groups in its molecule and having a molecular weight of 3,000 or less is contained as component (II).

It is necessary that this epoxy compound has two or more epoxy groups in its molecule, because one group is not enough in improving adhesive property with other layer when used in a laminate. It is necessary that molecular weight of the epoxy compound is 3,000 or less, and 1,500 or less is more preferable. When the molecular weight exceeds 3,000, adhesive strength with other layer also becomes insufficient.

Examples of the epoxy compound include phthalic acid diglycidyl ester, isophthalic acid diglycidyl ester, terephthalic acid diglycidyl ester, adipic acid diglycidyl ester, trimethylolpropane polyglycidyl ester, polyglycerol polyglycidyl ester, pentaerythritol polyglycidyl ester, butanediol diglycidyl ester, hydrogenated bisphenol A diglycidyl ester, phenol novolak polyglycidyl ester, epoxidated plant oil and the like. Among them, epoxidated plant oil is most suitable for laminates to be used in packaging materials of food and the like from the viewpoint of safety.

The epoxidated plant oil is a product obtained by carrying out epoxidation of unsaturated double bonds in a natural plant oil using peracid or the like, and its examples include epoxidated soybean oil, epoxidated olive oil, epoxidated linseed oil, epoxidated safflower oil, epoxidated corn oil and the like.

In this connection, the presence of a small amount of oil which is not epoxidated or its epoxidation is insufficient, as a by-product of the epoxidation of plant oil, does not spoil effects of the invention.

Regarding the blending amount of these epoxy compounds (II), they are added within the range of from 0.01 to 5% by weight, preferably from 0.01 to 2% by weight, more preferably from 0.01 to 1.5% by weight, based on the total amount of components (I) and (II). The amount to be added if less than 0.01% by weight would bear no sufficient effect to improve adhesive strength and if larger than 5% by weight would entail problems of not only impregnating the moldings with odor but also causing sticky surface and reducing optical characteristics.

According to the invention, it is desirable that a compound or olefin polymer having a functional group capable of reacting with epoxy group is further blended as component (III) depending on the object, use and the like. This component (III) is not essential but can further improve adhesive property by its addition without carrying out an ozone treatment.

As the functional group capable of reacting with epoxy group, it is desirable that one or more groups among acid anhydride groups, carboxyl group and carboxylic acid metal salts are included in the molecule. These may be compounds having functional groups, but it is desirable that they are introduced into polyolefin molecules by copolymerization or graft method.

A multiple copolymer of ethylene with a compound capable of copolymerizing with ethylene can be cited as the olefin copolymer having a functional group capable of reacting with epoxy group, which is produced by copolymerization. Examples of the compound capable of copolymerizing with ethylene, to be used in the copolymerization or graft method, include (meth)acrylic acid and the like $\alpha,\beta$-unsaturated carboxylic acids, sodium (meth)acrylate and the like $\alpha,\beta$-unsaturated carboxylic acid metal salts, and maleic anhydride, itaconic anhydride, citraconic anhydride and the like unsaturated carboxylic acid anhydrides. Though not particularly limited, hydroxyethyl (meth)acrylate, (meth)allyl alcohol and the like hydroxyl group-containing compounds, allylamine and the like unsaturated amino compounds and the like can also be exemplified.

In addition to these unsaturated compounds having a functional group capable of reacting with epoxy group, multiple copolymers in which (meth)acrylic acid ester, vinyl acetate, vinyl alcohol ester and the like are copolymerized can also be used. In addition, two or more of the copolymers of these compounds with ethylene can be used jointly.

The polyolefin into which a functional group capable of reacting with epoxy group is introduced by graft modification is produced generally by allowing a polyolefin, a radical generator and a compound for modification use to undergo the reaction under melted or liquid condition.

Examples of the polyolefin for graft modification use include a high-pressure low density polyethylene, a linear low density polyethylene, a high density polyethylene, a polypropylene and the like homopolymers, as well as a propylene-ethylene copolymer, a propylene-butene-1 copolymer, an ethylene-vinyl acetate copolymer, an ethylene-(meth)acrylic acid ester copolymer, an ethylene-vinyl acetate-(meth)acrylic acid ester copolymer and the like copolymers and mixtures thereof.

Also useful are those in which a copolymer already containing an acid or acid anhydride group capable of reacting with epoxy group, such as an ethylene-(meth)acrylic acid ester-maleic anhydride copolymer, is further subjected to graft modification.

Though kinds of the radical generator to be used in the modification is not particularly limited, organic peroxides are generally used, and their examples include di-t-butyl peroxide, dicumyl peroxide, t-butylcumyl peroxide and the like dialkyl peroxides, i-butyl peroxide and the like diacyl peroxides, di-i-propyl peroxydicarbonate and the like peroxydicarbonates, t-butyl peroxypivalate and the like peroxyesters, methyl ethyl ketone peroxide and the like ketone peroxides, 1,1-bis-t-butyl peroxycyclohexane and the like peroxy ketals and t-butyl hydroperoxide and the like hydroperoxides. Particularly preferred among them are dicumyl peroxide, 2,5-dimethyl-2,5-bis(t-butylperoxy)hexane, 1,3-bis(2-t-butylperoxyisopropyl)benzene, benzoyl peroxide and the like.

As the unsaturated compound for modification use, unsaturated compounds similar to the aforementioned compounds copolymerizable with ethylene are used.

The compound or olefin polymer having a functional group capable of reacting with epoxy group, as component (III) in the invention, is used in an amount of less than 50% by weight, preferably from 2 to 25% by weight, more preferably from 5 to 20% by weight, based on the total amount of components (I), (II) and (III). When the amount is larger than 50% by weight, adhesive strength is improved, but mechanical characteristics, optical characteristics and thermal characteristics based on the ethylene (co)polymer of component P are reduced and it results in increased cost.

Various known additive agents can be added to the polyolefin resin composition of the invention within such a range that they do not essentially inhibit characteristics of the invention, which include an organic or inorganic filler, a tackifier, an antioxidant, a defogging agent, an organic or inorganic pigment, a dispersing agent, a nucleating agent, a foaming agent, a flame retarder, a crosslinking agent, an ultraviolet ray inhibitor and a lubricant such as an unsaturated and/or saturated fatty acid amide or a metal salt of an unsaturated and/or saturated higher fatty acid. Among these additive agents, the lubricant, tackifier and inorganic filler are suitably used for further improving workability.

Examples of the lubricant include oleic acid amide, stearic acid amide, erucic acid amide and the like fatty acid amides; stearic acid monoglyceride, stearic acid diglyceride, oleic acid monoglyceride, oleic acid diglyceride and the like fatty acid glycerol ester compounds and polyethylene glycol addition products thereof.

Examples of the inorganic filler include precipitated calcium carbonate light, calcium carbonate heavy, talc, silica, zeolite, magnesium carbonate, feldspar and the like.

Examples of the tackifier include polybutene, a castor oil derivative, a sorbitan fatty acid ester, rosin, a rosin derivative, a petroleum resin, hydrogenated products thereof and the like tackifiers, rubber and the like. These tackifiers can be blended within the range of from 0.5 to 20 parts by weight. As the pigment, various types of commercially available colorant masterbatch, in addition to carbon black, titanium white and the like, can be used suitably.

In addition, certain additives for obtaining appropriate slipping, anti-static and defogging properties can also be blended.

Though not particularly limited, their illustrative examples include sorbitan fatty acid esters such as sorbitan monooleate, sorbitan monolaurate, sorbitan monobehenate, sorbitan monostearate and the like; glycerol fatty acid esters such as glycerol monooleate, glycerol monostearate, glycerol monolaurate, glycerol monobehenate and the like; and polyglycerol fatty acid esters such as diglycerol monolaurate, diglycerol monostearate, diglycerol monooleate, tetraglycerol monooleate, tetraglycerol monostearate, hexaglycerol monolaurate, hexaglycerol monooleate, decaglycerol monolaurate, decaglycerol monostearate, decaglycerol monooleate and the like, as well as polyhydric alcohol fatty acid esters and ethylene oxide addition products thereof, higher fatty acid amides and ethylene oxide addition products thereof, higher fatty acid alkanolamides and the like.

These additives are used alone or as a mixed composition thereof, and their amount to be added is generally from 0.01 to 0.5% by weight, preferably from 0.05 to 0.3% by weight. The adding amount if smaller than 0.01% would bear no sufficient reforming effect of the additives and if larger than 0.5% by weight would generate stickiness due to too much amount of the additives rose to the surface and, as a result, would cause problems such as considerably reduced workability, so that such cases are not desirable.

The polyolefin resin composition of the invention can be produced by appropriately employing a method in which the respective components are mixed using Henschel mixer, a ribbon mixer or the like, or a method in which the resulting mixture is further mixed and kneaded using an open roller, Banbury mixer, a kneader, an extruder or the like. The melt kneading temperature is generally from 110 to 350°C, but preferably from 120 to 300°C in view of easy handling.

A second embodiment of the invention is a laminate which comprises the polyolefin resin composition and a base material. The laminate of the invention is described in detail below.

## Laminate

Since the polyolefin resin composition of the invention has excellent adhesive property, its characteristics can be particularly exerted when used as laminates by laminating on various types of base materials.

Examples of the base material include plastic films or sheets, plates, papers, non-woven or woven fabric made of synthetic resin fibers, natural fibers or the like, metal foils and the like, and lamination on these base materials

renders possible the provision of various performances such as barrier property, heat resistance, flexibility, rigidity, transparency, water resistance, printability, abrasion resistance and easy tearing property.

As the base material of packaging materials, plastic films or sheets, metal foils and the like are particularly desirable. Useful examples of these plastic films or sheets, metal foils and the like include films or sheets of polyamide 6, polyamide 66, polyamide 12, modified polyamide and the like polyamides, polyethylene terephthalate, polybutylene terephthalate, polyethylene naphthalate and the like polyesters and ethylene-vinyl acetate copolymer saponification product (EVOH), oriented polypropylene (OPP), oriented polyamide (ONY), oriented polyethylene terephthalate (OPET) and the like thermoplastic resins, as well as resin films on which a thin film such as of silicon oxide, aluminum, aluminum oxide or the like is deposited and metal foils such as of iron, aluminum and the like. As occasion demands, corona discharge treatment, flame treatment, plasma treatment, ultraviolet ray treatment or the like surface treatment may be carried out.

Among these base material layers, films or sheets of polyamides, polyesters or ethylene-vinyl acetate copolymer saponification products and aluminum foil are used in a large amount in packaging materials, and the resin composition of the invention exerts excellent adhesive property on these base materials.

Regarding the laminate, various layers may be arranged in addition to the polyolefin resin composition layer and the base material layer. Illustrative examples thereof include print layer/wood-free paper/HrX/Al-deposited PET/HrX, HpLDPE/print layer/paperboard/HrX/Al-deposited PET/HrX, HpLDPE/print layer/paperboard/HrX/silica-deposited PET/HrX, HpLDPE/print layer/paperboard/HrX/Al oxide-deposited PET/HrX, PET/HrX, PET/print layer/HrX, PET/HrX/mLLDPE, PET/print layer/HrX/mLLDPE, PET/HrX/EVOH/HrX, PET/print layer/HrX/EVOH/HrX, PET/HrX/Al/Hrx, PET/print layer/HrX/Al/HrX, PET/HrX/Al-deposited PET/HrX, PET/print layer/HrX/Al-deposited PET/HrX, PET/HrX/Al oxide-deposited PET/HrX, PET/print layer/HrX/Al oxide-deposited PET/HrX, PET/HrX/silica-deposited PET/HrX, PET/print layer/HrX/silica-deposited PET/HrX, PET/HrX/Al-deposited PET/HrX/mLLDPE, PET/print layer/HrX/Al-deposited PET/HrX/mLLDPE, PET/PVDC coat layer/print layer/HrX, PA layer/PVDC coat layer/print layer/HrX, PA layer/PVDC coat layer/print layer/HrX/mLLDPE, OPP/print layer/HrX, cellophane/print layer/HrX and the like. (In the above, HrX: polyolefin resin composition layer according to the invention, PET: polyethylene terephthalate, EVOH, ethylene-vinyl acetate copolymer saponification product, PA: polyamide resin, PVDC: polyvinylidene chloride resin and OPP: oriented polypropylene.)

For carrying out molding of the laminate of the invention, extrusion laminating molding, co-extrusion molding, heat sensitive adhesion, calender molding, blow molding, inflation molding and the like methods can be used. Particularly, considerable adhesive strength improving effect can be obtained by the extrusion laminating molding in comparison with conventional counterparts.

A third embodiment of the invention is a method for the production of a laminate, in which the polyolefin resin composition is laminated on a base material by extrusion laminating molding.

The term extrusion laminating molding as used herein means a method in which a thermoplastic resin is heated and melted using an extruder and excluded through a T-die in the form of a membrane which is then put on various films, foils and the like base materials, thereby carrying out formation of the membrane and its adhesion at the same time, which is broadly employed in the packaging materials, released paper and the like fields making use of its characteristic point in terms of productivity.

Regarding molding temperature in the extrusion laminating molding, it is generally within the range of from 200 to 300°C in the case of LLDPE and mLLDPE by conventional Ziegler catalyst in view of moldability, but in the case of the polyolefin resin composition of the invention, its molding can be carried out within the range of from 200 to 350°C, so that molding processing can be effected within a broad range of from low temperature to high temperature molding, and high speed moldability can be improved without reducing adhesive strength.

The reason for this is that, when the temperature exceeds 300°C, conventional LLDPE or mLLDPE causes thermal decomposition, high speed moldability is reduced accompanied by the reduction of melt tension at the time of laminating and neck-in becomes large at the same time, but in the case of the polyolefin resin composition of the invention, crosslinking reaction mediated by the epoxy compound occurs at a temperature of 280°C or more and stable high speed moldability and low neck-in can therefore be generated. By molding at a high temperature of 300°C or more, adhesive strength for various base materials is sharply improved.

Also, in the case of the extrusion laminating molding, the adhesive strength can be further improved by an ozone treatment in which ozone-containing air is sprayed on a melting film to effect oxidation of the melting film surface, by a corona discharge treatment, plasma treatment, flame treatment or the like pretreatment on the adhesion side of the base material just before topping of the melting film or by joint use of the ozone treatment and surface treatment. In addition, one of the characteristics of the invention is that a laminate with no reduced adhesive strength can be produced without using an anchor coat agent.

According to the laminate production method of the invention, it is possible to obtain strong adhesive strength within a broad range of from a low temperature region (from 200 to 300°C) to a high temperature region (300°C or more). When the production is effected within the low temperature region, it is desirable to carry out an ozone treatment of the melting film at the time of extrusion laminating, because more strong adhesive strength can be achieved by carrying out the ozone treatment. Sharp improvement of the adhesive strength with the base material became possible by sufficiently oxidizing the surface of the melting film and intervening the epoxy compound therein. It is also one of the characteristics of the invention that an adhesive strength under high humidity (water resistance) is also improved sharply because of the presence of an epoxy compound particularly having a low molecular weight of 3,000 or less. In consequence, in the extrusion laminating process of the invention at a low temperature region, the ozone treatment method by which sufficient surface oxidation can be obtained is a particularly advantageous method. In addition, among commercially available base materials, there are base materials to which a corona discharge treatment is applied in advance for the purpose of improving adhesive property, but sufficient adhesive strength cannot be obtained by certain base materials. Thus, the adhesive strength can further be improved by carrying out an in-line surface treatment of the adhesion side of the base material at the time of extrusion laminating. As such a surface treatment method, a corona discharge treatment, a flame treatment, a plasma treatment, an electron beam treatment, an ultraviolet ray treatment or the like can be suitably used. Among these methods, the corona discharge treatment is desirable in view of the cost.

According to the corona discharge treatment, corona discharge is carried out by applying a high voltage while a base material is inserted between an insulation roller and an electrode, in which ozone and so on generated by dielectric breakdown of air are activated by reacting with the base material surface, and a commercially available corona discharge treating machine can be used. The corona treating amount (discharge density) in this case is preferably 10 W min/$m^2$ or more, more preferably from 20 to 200 W min/$m^2$. When the treating amount is 10 W min/$m^2$ or less, improvement of strong adhesive strength cannot be obtained. In addition, more strong adhesive strength can also be obtained by subjecting the thus obtained laminate to a heat treatment at a temperature of 40°C or more and melting point or less of the resin.

EXAMPLES

The invention is illustratively described in the following based on inventive and comparative examples, but the invention is not restricted thereby.

(Test Methods)

Density: Carried out in accordance with JIS K6760.

MFR: Carried out in accordance with JIS K6760.

DSC measurement: A sheet of 0.2 mm in thickness was formed by heat pressing and a sample of about 5 mg was stamped out, kept at 230°C for 10 minutes, cooled to 0°C at 2°C/minute and then heated to 170°C at 10°C/minute, and the thus obtained temperature of the maximum temperature peak was used as the maximum peak temperature Tm.

Molecular weight distribution Mw/Mn: A GPC apparatus (Waters Model 150) was used, and ODCB of 135°C was used as the solvent. As the column, GNHHR-H(S) manufactured by Tosoh was used.

High speed moldability (DD): Using an extruder of 90 mm diameter (50 rpm) and under conditions of 800 mm T-die width and 120 mm air gap from T-die to roller, stability of the melting film was observed by increasing its take-off speed at a low temperature region molding temperature of 280°C and at a high temperature region molding temperature of 305°C, and the maximum tolerable speed was measured.

Neck-in: Using the above extruder, a sample was molded in a film thickness of 25 μm at a take-off speed of 150 m/minute, and the coat width on the base material was measured and its difference (mm) from the die width was measured.

Adhesive strength: A laminate was produced by laminating a film on a base material by extrusion laminating process under the same conditions of the neck-in measurement. In this case, using SORBEX-II Ozone Generator manufactured by Softal Japan, a surface oxidation treatment was carried out by spraying ozone to the melting film on the entire base material width, from the base material side of T-die through a nozzle at a concentration of 50 g/$m^3$ and at a flow rate of 3 $m^3$/hr. The thus obtained laminate was cut into a strip of 15 mm in width and 180° peeling was carried out at a rate of 300 mm/minute to measure its strength.

Water resistance: The strip sample of 15 mm in width prepared for the adhesive strength measurement was completely soaked in hot water of 40°C by putting a sinker and kept in the hot water for 2 days. Thereafter, water adhered to the sample was wiped out and the adhesive strength was measured by the aforementioned method.

Regarding the base material, a biaxially oriented polyamide film (oriented nylon (ONy): "Harden Film N1100" manufactured by Toyobo, 860 mm in width and 15 μm in thickness) and a biaxially oriented polyethylene terephthalate film (PET: "Taikou Polyester Film FE2001" manufactured by Nimura Kagaku Kogyo, 860 mm in width and 12 μm in

thick ness) were used.

Transparency: Using a biaxially oriented polypropylene film (OPP) having a width of 860 mm and a thickness of 20 μm as the base material, haze of a laminate produced under the conditions described above was measured. The measurement was carried out in accordance with JIS K7105.

(Production of ethylene (co)polymer (P'-2))

(1) Preparation of solid catalyst

Under nitrogen, a catalyst preparation vessel (No. 1) equipped with an electromagnetic stirrer was charged with purified toluene and then with 28 g of dipropoxydichlorozirconium ($Zr(OPr)_2Cl_2$) and 48 g of methylcyclopentadiene, and 45 g of tridecylalminum was added dropwise thereto while keeping the system at 0°C. After completion of the dropwise addition, the reaction system was stirred for 16 hours by keeping it at 50°C. This solution was named solution A.

Next, under nitrogen, purified toluene was added to another catalyst preparation vessel (No. 2) equipped with a stirrer, and the reaction was carried out by adding the solution A and then a toluene solution of 6.4 mol methylaluminoxane. This was named solution B.

Next, under nitrogen, the preparation vessel (No. 1) equipped with a stirrer was charged with purified toluene, 1,400 g of silica (manufactured by Fiji Devison, grade # 952, surface area 300 $m^2/g$) which had been sintered in advance at 400°C for a predetermined time and then total volume of the solution B in that order, and the mixture was stirred at room temperature. Thereafter, the solvent was removed by nitrogen blowing to obtain a solid catalyst powder having good fluidity. This was named catalyst C.

(2) Polymerization of sample

Using a continuous fluidized bed vapor phase polymerization apparatus, copolymerization of ethylene with 1-hexene was carried out at a polymerization temperature of 70°C and under a total pressure of 20 $kgf/cm^2G$. The polymerization was carried out by continuously supplying the catalyst C and continuously supplying each gas to keep the gas composition in the system at a constant level, thereby producing a copolymer (P'-2).

Ethylene-1-hexene copolymer (P'-2)

(a) Density: 0.911 $g/cm^3$
(b) MFR: 11 g/10 minutes
(c) Molecular weight distribution (Mw/Mn): 2.6
(d) Composition distribution parameter Cb: 1.19
(e) TREF peak temperature: 83.2, 96.5°C
(f) d - 0.008 log MFR: 0.903 X = 4.0
($9.8 \times 10^3 \times (0.9300 - d + 0.008 \log MFR)^2 + 2.0 = 9.32$)

(Production of ethylene (co)polymer (P'-3))

After replacing the atmosphere with nitrogen, a stainless steel autoclave equipped with an agitator was charged with purified toluene. Next, butene-1 was added thereto and then a mixed solution of bis-1,3-dimethyl(cyclopentadienyl)zirconium dichloride (0.02 mmol as Zr) and methylalumoxane (MAO) (MAO/Zr = 100 (molar ratio)) was added, and the mixture was heated to 120°C. Next, the polymerization was started by adding ethylene. By carrying out 1 hour of polymerization while effecting continuous polymerization of ethylene and keeping the total pressure, ethylene-butene-1 copolymer (P'-3) was obtained.

Ethylene-butene-1 copolymer (P'-3)

(a) Density: 0.918 $g/cm^3$
(b) MFR: 3.8 g/10 minutes
(c) Molecular weight distribution (Mw/Mn): 2.3

(d) Composition distribution parameter (Cb): 1.05
(e) TREF peak temperature: 94.7°C
(f) d - 0.008 log MFR: 0.913 X = 2.0
$(9.8 \times 10^3 \times (0.9300 - d + 0.008 \log MFR)^2 + 2.0 = 4.7)$

(Ethylene-butene-1 copolymer (LLDPE: (P')))

(a) Density: 0.913 g/cm$^3$
(b) MFR: 8.6 g/10 minutes
(C) Mw/Mn: 3.5

(Component (III))

The following materials were used as the olefin copolymer having a functional group capable of reacting with epoxy group.

(III-1) Ethylene-acrylic acid copolymer (EAA) "Yukalon A221M" mfd. by Mitsubishi Petrochemical

MFR: 7.0 g/10 minutes
Acrylic acid: 8.5% by weight

(III-2) Maleic anhydride modified polyethylene

MFR: 36.6 g/10 minutes
Maleic anhydride: 0.09% by weight

Example 1

As component (II), 0.5% by weight of an epoxidated soybean oil ("O-130P" mfd. by Asahi Denka, molecular weight = 1,000) was added to the ethylene-1-hexene copolymer (P'-2) used as component P, and the mixture was melt-kneaded at 200°C using a twin screw extruder of 30 mm diameter to obtain a polyolefin resin composition. Using an extrusion laminator having an extruder of 90 mm diameter, a laminate was produced by laminating the thus obtained resin composition on a base material by extrusion laminating process at a temperature of 280°C under conditions of 800 mm T-die width and 120 mm air gap, while spraying ozone to the base material side of the melting film at a concentration of 50 g/m$^3$ and at a flow rate of 3 m$^3$/hr. In the case of Example 1, the formed film showed small neck-in, and the thus obtained laminate exerted good adhesive property. In addition, reduction of adhesive strength was not found in the water resistance test.

Example 2

A polyolefin resin composition was prepared and a laminate was produced therefrom, in the same manner as described in Example 1 except that 1.0% by weight of the epoxidated soybean oil was added as component (II).
This composition showed good moldability, and the adhesive property and transparency were also good.

Example 3

A polyolefin resin composition was prepared and a laminate was produced therefrom, in the same manner as described in Example 1 except that the ethylene-butene-1 copolymer (P'-3) was used as component P.
This composition showed good moldability, and the adhesive property and transparency were also good.

Example 4

A polyolefin resin composition was prepared and a laminate was produced therefrom, in the same manner as described in Example 1 except that 0.5% by weight of an epoxidated linseed oil (molecular weight = 1,000) was added as component (II).

This composition also showed good moldability, and the adhesive property and transparency were also good.

Example 5

A composition was obtained by adding 0.5% by weight of the epoxidated soybean oil as component (II) to a composition prepared by mixing the P'-2 and component (III-1) at a weight ratio of 80:20 and melt-kneading the mixture in the same manner as described in Example 1. Using the thus obtained composition, a laminate was produced in the same manner as described in Example 1, except that the ozone treatment was not carried out. This also showed good moldability and excellent adhesive property and transparency without carrying out the ozone treatment.

Example 6

A composition was obtained by adding 0.5% by weight of the epoxidated soybean oil as component (II) to a composition prepared by mixing the P'-2 and component (III-2) at a weight ratio of 80:20 and melt-kneading the mixture in the same manner as described in Example 1. Using the thus obtained composition, a laminate was produced in the same manner as described in Example 1, except that the ozone treatment was not carried out. This also showed good moldability and excellent adhesive property and transparency without carrying out the ozone treatment.

Example 7

Molding was carried out in the same manner as described in Example 1, except that the ethylene copolymer (P') was used as component P. Though the transparency was slightly inferior, this composition also showed good moldability and adhesive strength and the water resistance was also good.

Example 8

Molding was carried out in the same manner as described in Example 1, except that an in-line corona treatment of the base material was carried out at an electrode width of 600 mm and an output of 8 kW using a Corona Treater manufactured by Toyo Pillar. By the joint use of corona treatment, more strong adhesive property was obtained. The moldability and water resistance were also good.

Example 9

Molding was carried out in the same manner as described in Example 1, except that the molding temperature was set to 305°C. By the addition of the epoxy compound, molding at 300°C or more became possible, and good adhesive strength was obtained.

Example 10

Molding was carried out in the same manner as described in Example 2, except that the molding temperature was set to 305°C. The melting film was stable in this case too, and the transparency and adhesive strength were both good.

Example 11

Molding was carried out in the same manner as described in Example 3, except that the molding temperature was set to 305°C. The melting film was stable in this case too, and the transparency and adhesive strength were both good.

Example 12

Molding was carried out in the same manner as described in Example 4, except that the molding temperature was set to 305°C. The melting film was stable in this case too, and the transparency and adhesive strength were both good.

Example 13

Molding was carried out in the same manner as described in Example 5, except that the molding temperature was set to 305°C. The melting film was stable in this case too, and, though the transparency was slightly reduced, the adhesive strength was further improved.

Example 14

Molding was carried out in the same manner as described in Example 6, except that the molding temperature was set to 305°C. The melting film was stable in this case too. Though the transparency was slightly reduced similar to the case of Example 6, the adhesive strength was further improved.

Example 15

Molding was carried out in the same manner as described in Example 7, except that the molding temperature was set to 305°C. Though the transparency was slightly reduced, good moldability and adhesive strength were obtained by this composition too, and the water resistance was also good.

Comparative Example 1

A laminate was produced at a molding temperature of 280°C in the same manner as described in Example 1, except that the ethylene (co)polymer (P') was used alone without adding the epoxy compound of component (II).
The neck-in of this case was larger than the case of the addition of the epoxy compound, and sufficient adhesive strength was not obtained too.

Comparative Example 2

An attempt was made to produce a laminate at a molding temperature of 305°C using the resin composition prepared in Comparative Example 1. However, the melting film was unstable by the P' alone due to thermal decomposition at 305°C, so that the film formation was not possible.

Comparative Example 3

A polyolefin resin composition was prepared and a laminate was produced therefrom, in the same manner as described in Example 1 except that 0.5% by weight of an un-epoxidated soybean oil was added instead of component (II).
This product showed considerably large neck-in, and its adhesive strength was also insufficient.

Comparative Example 4

An attempt was made to produce a laminate at a molding temperature of 305°C using the resin composition prepared in Comparative Example 3. However, the melting film was unstable due to thermal decomposition at 305°C, so that the film formation was not possible.
Compositional ratios of the polyolefin resin compositions of Examples 1 to 15 and Comparative Examples 1 to 4 are shown in the following Table 1. Also, physical properties of the obtained laminates and their molding temperatures are shown in Table 2.

Table 1

| Example | Component (P) | Amount of (P) (wt. part) | Component (II) | Amount of (II) (wt. part) | Component (III) | Amount of (III) (wt. part) |
|---|---|---|---|---|---|---|
| 1 | P'-2 | 100 | epoxidated soybean oil | 0.5 | none | 0 |

Table 1 (continued)

| Example | Component (P) | Amount of (P) (wt. part) | Component (II) | Amount of (II) (wt. part) | Component (III) | Amount of (III) (wt. part) |
|---|---|---|---|---|---|---|
| 2 | P'-2 | 100 | " | 1 | none | 0 |
| 3 | P'-3 | 100 | " | 0.5 | none | 0 |
| 4 | P'-2 | 100 | epoxidated linseed oil | 0.5 | none | 0 |
| 5 | P'-2 | 80 | epoxidated soybean oil | 0.5 | III-1 | 20 |
| 6 | P'-2 | 80 | " | 0.5 | III-2 | 20 |
| 7 | P' | 100 | " | 0.5 | none | 0 |
| 8 | P'-2 | 100 | " | 0.5 | none | 0 |
| 9 | P'-2 | 100 | " | 0.5 | none | 0 |
| 10 | P'-2 | 100 | " | 1 | none | 0 |
| 11 | P'-3 | 100 | " | 0.5 | none | 0 |
| 12 | P'-2 | 100 | epoxidated linseed oil | 0.5 | none | 0 |
| 13 | P'-2 | 80 | epoxidated soybean oil | 0.5 | III-1 | 20 |
| 14 | P'-2 | 80 | " | 0.5 | III-2 | 20 |
| 15 | P' | 100 | " | 0.5 | none | 0 |
| Comp. Ex. 1 | P' | 100 | none | 0 | none | 0 |
| Comp. Ex. 2 | P' | 100 | none | 0 | none | 0 |
| Comp. Ex. 3 | P'-2 | 100 | un-epoxidated soybean oil | 0.5 | none | 0 |
| Comp. Ex. 4 | P'-2 | 100 | " | 0.5 | none | 0 |

Table 2

| Example | Molding temp. | High speed moldability (DD) | Neck-in | Adhesive property (g/15 mm) | | Water resistance (g/15 mm) | Transparency (haze) |
|---|---|---|---|---|---|---|---|
| | (°C) | (m/min) | (mm) | /ONy | /PET | /PET | /OPP |
| 1 | 280 | 170 | 143 | 230 | 470 | 450 | 5.1 |
| 2 | 280 | 200 | 120 | 190 | 510 | 500 | 5.5 |
| 3 | 280 | 210 | 131 | 220 | 430 | 400 | 4.8 |
| 4 | 280 | 190 | 156 | 280 | 520 | 480 | 5.3 |
| 5 | 280 | 160 | 77 | 310 | 430 | 410 | 6.5 |
| 6 | 280 | 190 | 88 | 220 | 330 | 360 | 5.9 |
| 7 | 280 | 180 | 130 | 240 | 450 | 420 | 6.7 |
| 8 | 280 | *1 | *1 | 440 | 580 | 590 | 5.2 |
| 9 | 305 | 150 | 122 | 580 | 810 | 800 | 4.6 |
| 10 | 305 | 180 | 78 | 260 | 980 | 950 | 5.1 |
| 11 | 305 | 200 | 126 | 520 | 770 | 780 | 4.1 |
| 12 | 305 | 160 | 111 | 610 | 830 | 860 | 4.7 |
| 13 | 305 | 120 | 53 | 570 | 880 | 820 | 6.3 |
| 14 | 305 | 190 | 91 | 410 | 680 | 690 | 4.8 |
| 15 | 305 | 190 | 125 | 380 | 620 | 670 | 5.7 |
| Comp. Ex. 1 | 280 | 120 | 215 | 30 | 30 | *1 | 4.9 |
| Comp. Ex. 2 | 305 | (not moldable) | | | | | |
| Comp. Ex. 3 | 280 | 130 | 223 | 30 | 70 | *1 | 4.7 |
| Comp. Ex. 4 | 305 | (not moldable) | | | | | |

(Note)
*1: Not measured.

<u>Example 16</u>

Molding was carried out in the same manner as described in Example 1, except that P'-2 was used as component P and melt-kneaded with an HpLDPE of MFR = 7 g/10 minutes and 0.917 in density by changing their ratio. By mixing the high melt tension HpLDPE, neck-in was sharply improved. Also, the adhesive strength and water resistance were both good.

Compositional ratios of the polyolefin resin compositions of Example 16 are shown in Table 3, and physical properties of the obtained laminates and their molding temperatures are shown in Table 4.

Table 3

| Example | P'-2 (wt. part) | HpLDPE (wt. part) | Component (II) | Amount of (II) (wt. part) | Component (III) | Amount of (III) (wt. part) |
|---|---|---|---|---|---|---|
| 16-1 | 90 | 10 | epoxidated soybean oil | 0.5 | none | 0 |
| 16-2 | 70 | 30 | " | 0.5 | none | 0 |
| 16-3 | 60 | 40 | " | 0.5 | none | 0 |

Table 3 (continued)

| Example | P'-2 (wt. part) | HpLDPE (wt. part) | Component (II) | Amount of (II) (wt. part) | Component (III) | Amount of (III) (wt. part) |
|---|---|---|---|---|---|---|
| 16-4 | 40 | 60 | " | 0.5 | none | 0 |
| 16-5 | 30 | 70 | " | 0.5 | none | 0 |

Table 4

| Example | Molding temp. | High speed moldability (DD) | Neck-in | Adhesive property (g/15 mm) | | Water resistance (g/15 mm) | Transparency (haze) |
|---|---|---|---|---|---|---|---|
| | (°C) | (m/min) | (mm) | /ONy | /PET | /PET | /OPP |
| 16-1 | 280 | >250 | 120 | 250 | 490 | 450 | 5.3 |
| 16-2 | 280 | >250 | 98 | 270 | 530 | 500 | 5.5 |
| 16-3 | 280 | 180 | 73 | 290 | 520 | 530 | 5.8 |
| 16-4 | 280 | 140 | 63 | 260 | 500 | 540 | 5.5 |
| 16-5 | 280 | 80 | 55 | 240 | 480 | 420 | 5.7 |

INDUSTRIAL APPLICABILITY

The invention is a composition containing a novel linear ethylene (co)polymer having excellent physical properties and workability and good adhesive property with base materials, which has a relatively broad composition distribution despite of the narrow molecular weight distribution, contains reduced amounts of low molecular weight components and amorphous components and therefore is excellent in mechanical properties, molding processability, optical characteristics and heat resistance. It shows excellent adhesive strength when laminated with a polyester, a polyamide, a metal foil or the like by extrusion laminating molding, T-die molding, inflation film molding or the like means. Particularly, in the case of extrusion laminating process, it renders possible high speed molding within a broad temperature range of from a low temperature region to a high temperature region without using an anchor coat agent, which cannot be achieved by the conventional means, and a laminate having high adhesive strength can be provided. In addition, since such a laminate is excellent in adhesive strength, transparency and heat sealing property and its content of solvent extraction components is small, it is suitable for use, for example, in various packaging materials and containers of food and clothing.

**Claims**

**1.** A polyolefin resin composition which comprises:

resin component (I) containing a linear ethylene (co)polymer having (a) a density d of from 0.86 to 0.97 g/cm$^3$, (b) a melt flow rate (MFR) of from 0.01 to 100 g/10 minutes and (c) a molecular weight distribution (Mw/Mn) of from 1.5 to 5.0; and

component (II) comprising an epoxy compound containing two or more epoxy groups in its molecule and having a molecular weight of 3,000 or less, which is contained in an amount of from 0.01 to 5% by weight based on the total amount of components (I) and (II).

**2.** The polyolefin resin composition according to claim 1, wherein resin component (I) comprises 5% by weight or more of the linear ethylene (co)polymer and less than 95% by weight of other polyolefin resin.

**3.** The polyolefin resin composition according to claim 1, further containing component (III) comprising a compound or olefin polymer having a functional group capable of reacting with an epoxy group, in an amount of less than 50% by weight based on the total amount of components (I), (II) and (III).

**4.** The polyolefin resin composition according to claim 1, wherein said linear ethylene (co)polymer further satisfies the following requirement (d):

(d) a composition distribution parameter Cb is 2.00 or less.

**5.** The polyolefin resin composition according to claim 1, wherein said linear ethylene (co)polymer further satisfies the following requirements (d'), (e) and (f):

(d') the composition distribution parameter Cb is from 1.08 to 2.0;
(e) substantially plural number of peaks are present in its elution temperature-elution amount curve by temperature rising elution fractionation method; and
(f) an orthodichlorobenzene-soluble content X (wt %) at 25°C and the density d and melt flow rate (MFR) satisfy the following relationships:

(i) when $d - 0.008 \log MFR \geq 0.93$,

$$X < 2.0$$

(ii) when $d - 0.008 \log MFR < 0.93$,

$$X < 9.8 \times 10^{3} \times (0.9300 - d + 0.008 \log MFR)^{2} + 2.0 .$$

**6.** The polyolefin resin composition according to claim 5, wherein said linear ethylene (co)polymer is obtained by (co)polymerizing ethylene or ethylene with an α-olefin having from 3 to 20 carbon atoms in the presence of a catalyst containing at least an organic cyclic compound having a conjugated double bond and a compound of a Group IV transition metal in the periodic table.

**7.** The polyolefin resin composition according to claim 1, wherein said linear ethylene (co)polymer further satisfies the following requirements (d'') and (e')

(d'') the composition distribution parameter Cb is from 1.01 to 1.2, and
(e') substantially one peak is present in its elution temperature-elution amount curve by temperature rising elution fractionation method.

**8.** The polyolefin resin composition according to claim 7, wherein said linear ethylene (co)polymer is obtained by (co)polymerizing ethylene or ethylene with an α-olefin having from 3 to 20 carbon atoms in the presence of at least one catalyst containing a ligand having cyclopentadienyl skeleton and a compound of a Group IV transition in the periodic table.

**9.** The polyolefin resin composition according to claim 1, wherein the epoxy compound of component (II) is an epoxidated plant oil.

**10.** The polyolefin resin composition according to claim 3, wherein the compound or olefin polymer of component (III) having a functional group capable of reacting with epoxy group is a compound or polyolefin resin having in its molecule at least one group selected from the group consisting of an acid anhydride group, carboxyl group and a carboxylic acid metal salt.

**11.** The polyolefin resin composition according to claim 1, wherein said polyolefin resin composition is a composition for extrusion laminating use.

**12.** A laminate which comprises at least:

a polyolefin resin composition layer comprising:

resin component (I) containing a linear ethylene (co)polymer that satisfies requirements of having (a) a density of from 0.86 to 0.97 g/cm$^3$, (b) a melt flow rate of from 0.01 to 100 g/10 minutes and (c) a molecular weight distribution (Mw/Mn) of from 1.5 to 5.0; and
component (II) comprising an epoxy compound containing two or more epoxy groups in its molecule and

having a molecular weight of 3,000 or less, which is contained in an amount of from 0.01 to 5% by weight based on the total amount of components (I) and (II); and

a base material layer.

**13.** The laminate according to claim 12, wherein resin component (I) comprises 5% by weight or more of the linear ethylene (co)polymer and less than 95% by weight of other polyolefin resin.

**14.** The laminate according to claim 12, wherein said polyolefin resin composition layer further contains component (III) comprising a compound or olefin polymer having a functional group capable of reacting with epoxy group, in an amount of less than 50% by weight based on the total amount of components (I), (II) and (III).

**15.** The laminate according to claim 12, wherein said linear ethylene (co)polymer is a compound selected from those which further satisfy the following requirements (d'), (e) and (f), or (d'') and (e'):

(d') the composition distribution parameter Cb is from 1.08 to 2.0, (e) substantially plural number of peaks are present in its elution temperature-elution amount curve by temperature rising elution fractionation method, and (f) an orthodichlorobenzene-soluble content X (wt %) at 25°C and the density d and melt flow rate (MFR) satisfy the following relationships

(i) when $d - 0.008 \log MFR \geq 0.93$,

$$X < 2.0$$

(ii) when $d - 0.008 \log MFR < 0.93$,

$$X < 9.8 \times 10^3 \times (0.9300 - d + 0.008 \log MFR)^2 + 2.0 \text{ , or}$$

(d'') the composition distribution parameter Cb is from 1.01 to 1.2, and (e') substantially one peak is present in its elution temperature-elution amount curve by temperature rising elution fractionation method.

**16.** The laminate according to claim 12, wherein said epoxy compound of component (II) is an epoxidated plant oil.

**17.** The laminate according to claim 14, wherein said compound or olefin polymer of component (III) having a functional group capable of reacting with epoxy group is a compound or polyolefin resin having in its molecule at least one group selected from the group consisting of an acid anhydride group, carboxyl group and a carboxylic acid metal salt.

**18.** The laminate according to claim 14, wherein said base material is at least one material selected from a plastic film or sheet, a metal foil, paper, non-woven fabric and woven fabric.

**19.** The laminate according to claim 18, wherein said base material is at least one base material among a polyester, a polyamide, an ethylene-vinyl acetate copolymer saponification product and an aluminum foil.

**20.** A method for producing a laminate, which comprises extrusion-laminating, on a base material, a polyolefin resin composition comprising:

resin component (I) containing a linear ethylene (co)polymer that satisfies requirements of having (a) a density of from 0.86 to 0.97 g/cm$^3$, (b) a melt flow rate of from 0.01 to 100 g/10 minutes and (c) a molecular weight distribution (Mw/Mn) of from 1.5 to 5.0; and
component (II) comprising an epoxy compound containing two or more epoxy groups in its molecule and having a molecular weight of 3,000 or less, which is contained in an amount of from 0.01 to 5% by weight based on the total amount of components (I) and (II).

**21.** The method for producing a laminate according to claim 20, wherein said resin component (I) comprises 5% by weight or more of the linear ethylene (co)polymer and less than 95% by weight of other polyolefin resin.

**22.** The method for producing a laminate according to claim 20, wherein the linear ethylene (co)polymer in said polyolefin resin composition has a (d) composition distribution parameter Cb of 2.00 or less, and said polyolefin resin composition further contains component (III) comprising a compound or olefin polymer having a functional group capable of reacting with epoxy group, in an amount of less than 50% by weight based on the total amount of components (I), (II) and (III).

**23.** The method for producing a laminate according to claim 20, wherein at least one side of a melting film obtained by heat-melting said polyolefin resin composition at a temperature not lower than its melting temperature and not higher than 350°C is treated with ozone, and said extrusion-lamination is carried out onto the base material on which an anchor coat agent is not coated.

**24.** The method for producing a laminate according to claim 20, wherein said base material is subjected to a surface treatment, and said extrusion-lamination of the polyolefin resin composition is carried out onto the surface-treated side.

**25.** The method for producing a laminate according to claim 20, wherein at least one side of a melting film obtained by heat-melting said polyolefin resin composition at a temperature not lower than its melting temperature and not higher than 350°C is treated with ozone, and said extrusion-lamination is carried out onto a previously surface-treated side of the base material.

**26.** The method for producing a laminate according to claim 25, wherein said surface treatment is carried out on an in-line system.

**27.** The method for producing a laminate according to claim 24, wherein said surface treatment with respect to the base material is at least one surface treatment among a corona discharge treatment, a plasma treatment, a flame treatment an electron beam treatment and an ultraviolet ray treatment

*FIG. 1*

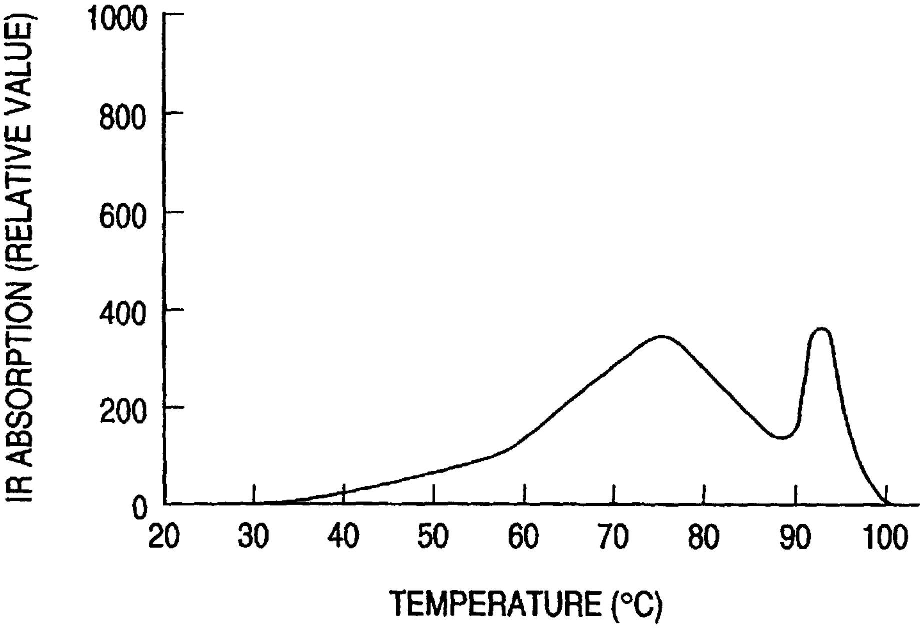
IR ABSORPTION (RELATIVE VALUE)
1000
800
600
400
200
0
20
30
40
50
60
70
80
90
100
TEMPERATURE (°C)

*FIG. 2*

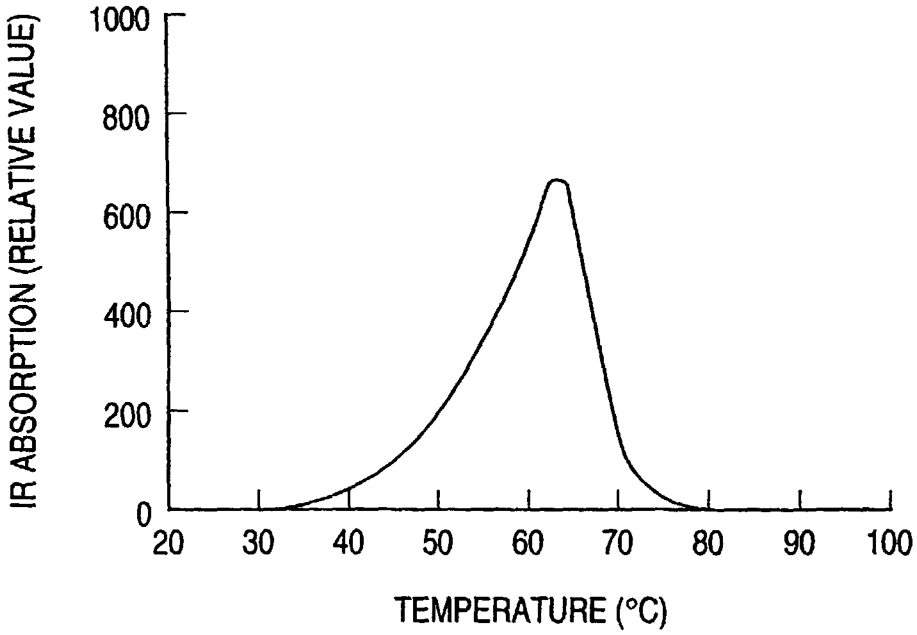
IR ABSORPTION (RELATIVE VALUE)
1000
800
600
400
200
0
20
30
40
50
60
70
80
90
100
TEMPERATURE (°C)

# INTERNATIONAL SEARCH REPORT

International application No.
PCT/JP98/00914

A. CLASSIFICATION OF SUBJECT MATTER
Int.Cl[6] C08L23/04, 63/00, C08F4/642, B32B27/32

According to International Patent Classification (IPC) or to both national classification and IPC

B. FIELDS SEARCHED

Minimum documentation searched (classification system followed by classification symbols)
Int.Cl[6] C08L23/00-23/36, 63/00-63/10, C08F4/60-4/70, B32B27/32

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP, 08-188679, A (Showa Denko K.K.), July 23, 1996 (23. 07. 96), Claims ; Par. Nos. [0010] to [0046] (Family: none) | 1-27 |
| X | JP, 05-093098, A (Idemitsu Petrochemical Co., Ltd.), April 16, 1993 (16. 04. 93), Claims ; Par. Nos. [0006] to [0033] (Family: none) | 1-27 |
| X | JP, 59-140235, A (Mitsubishi Chemical Industries Ltd.), August 11, 1984 (11. 08. 84), Claims ; page 2, lower right column, line 9 to page 8 (Family: none) | 1-27 |
| E | JP, 10-087910, A (Nippon Petrochemicals Co., Ltd.), April 7, 1998 (07. 04. 98), Claims ; Par. Nos. [0007] to [0082] (Family: none) | 1-27 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| June 1, 1998 (01. 06. 98) | June 9, 1998 (09. 06. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)

**INTERNATIONAL SEARCH REPORT**

International application No.
PCT/JP98/00914

C (Continuation). DOCUMENTS CONSIDERED TO BE RELEVANT

| Category* | Citation of document, with indication, where appropriate, of the relevant passages | Relevant to claim No. |
|---|---|---|
| A | JP, 09-111062, A (Sumitomo Chemical Co., Ltd.), April 28, 1997 (28. 04. 97), Claims ; Par. Nos. [0011] to [0057] (Family: none) | 1-27 |
| A | JP, 06-091779, A (Toppan Printing Co., Ltd.), April 5, 1994 (05. 04. 94), Claims ; Par. Nos. [0009] to [0029] (Family: none) | 12-27 |
| A | JP, 06-087156, A (Hoechst AG.), March 29, 1994 (29. 03. 94), Claims ; Par. Nos. [0008] to [0022] & EP, 481343, A2 & DE, 4032907, A1 | 12-27 |

Form PCT/ISA/210 (continuation of second sheet) (July 1992)